# EUROPEAN PATENT APPLICATION

(11) **EP 4 122 703 A1**
(43) Date of publication of application: **25.01.2023**
(21) Application number: 21772134.9
(22) Date of filing: 09.03.2021
(51) Int. Cl.: B32B 15/08, C09J 5/04, C09J 175/02, C09J 201/02

(54) **BONDED BODY OF METAL AND RESIN, AND METHOD FOR BONDING METAL AND RESIN**

(30) Priority: 18.03.2020 JP 2020048378
(71) Applicant: Showa Denko K.K., Tokyo 105-8518 (JP)
(72) Inventor: OTANI, Kazuo, Tokyo 105-8518 (JP); TAKAHASHI, Nobuyuki, Tokyo 105-8518 (JP)
(74) Representative: Strehl Schübel-Hopf & Partner
(86) International application number: PCT/JP2021/009122
(87) International publication number: WO 2021/187214

(57) **Abstract**

To provide a bonding technique that is capable of bonding a metal and a resin with a sufficient bonding strength. A bonded article including a functional group-carrying metal surface and a functional group-carrying resin surface, which are bonded directly to each other, the functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal, the functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.

## Description

### Technical Field

The present invention relates to a bonded article of a metal and a resin, and a method for bonding a metal and a resin.

### Background Art

In recent years, the multimaterialization has been actively promoted for components in various fields including automobile components, medical instruments, and home electric appliances from the standpoint of functionality enhancement, and weight saving of the products.

The multimaterialization is a method for weight saving and strength enhancement of materials by the combination use of materials that are different in function and/or kind of materials (which may be hereinafter referred to as different materials), such as a high tensile strength steel sheet, aluminum (Al), and carbon fiber-reinforced plastics (CFRP).

A technique of bonding different materials is necessary for achieving the multimaterialization.

The adhesive bonding using an adhesive has been mainly used as a method for bonding different materials.

However, a bonding technique using no adhesive is desired in the fields including purposes for devices that support high frequency signals (gigahertz (GHz) band), the demand of which is expected to expand.

For example, the support for high frequency signals is demanded for a printed circuit board (PCB), which is one of constitutional elements of the device supporting high frequency signals. The support of high frequency signals in PCB can also be said as a measure for allowing a high frequency signal to flow with a low transmission loss. The transmission loss includes the conductor loss derived from the conductor (copper circuit) constituting PCB and the dielectric loss derived from the dielectric material (insulating material) constituting PCB. The countermeasure for the conductor loss can be effectively conducted by smoothening the surface of copper as the conductor. However, the smoothening of the surface lowers the adhesiveness between the conductor (copper circuit) and the dielectric material (insulating material). The countermeasure for the dielectric loss can be effectively conducted by selecting a material having low dielectric characteristics. However, in the case where a material having low dielectric characteristics is selected, other properties, such as the adhesiveness and the heat resistance, tend to deteriorate. The use of an adhesive, which may be a factor of the dielectric loss, is not preferred in bonding the conductor (copper circuit) having a smoothed surface and the dielectric material (insulating material) having low dielectric characteristics.

As the technique of bonding different materials using no adhesive, a method of surface treatment with a silane coupling agent is proposed. The known ordinary methods of surface treatment with a silane coupling agent include a surface treatment with a silane coupling agent applied to a copper foil having a non-roughened surface or a copper foil plated with chromate, nickel, or the like. PTL 1 shows the advantage of a compound having a chemical structure derived from triazine thiol.

PTL 2 shows a case in which a copper foil treated with a silane coupling agent having an amine is further treated with a silane coupling agent having a vinyl group, such as a methacryloyl group, and is firmly bonded to a resin through reaction of the silanol groups. PTL 3 shows a case in which a reactive functional group-containing alkoxysilane is bonded to a reactive group on the surface of a bonding base material, and the portion enhanced with an alkoxysilane having plural vinyl groups is bonded to the surface of a material to be bonded. In both the cases shown in PTLs 2 and 3, a vinyl group is disposed in the second stage.

PTL 4 shows a case in which copper and a polyester resin are treated with two components including a compound having a functional group containing nitrogen and a silanol group as the first compound and an alkane type amine based silane coupling agent as the second compound.

### Citation List

### Patent Literatures

PTL 1: JP 2018-182043 A
PTL 2: JP 2011-91066 A
PTL 3: JP 2018-52067 A
PTL 4: Japanese Patent No. 6,268,370

### Summary of Invention

### Technical Problem

However, as a bonding method of a conductor (copper circuit) having a smoothed surface and a dielectric material (insulating material) having low dielectric characteristics, all the methods of PTLs 1 to 4 cannot completely prevent the conductor (copper circuit) and the dielectric material (insulating material) having low dielectric characteristics from being released from each other, and thus are not suitable for the purpose of supporting high frequency signals in PCB.

The present invention has been made in view of the technical background, and an object thereof is to provide a bonding technique that can bond a metal and a resin with a sufficient bonding strength and is suitable for the purpose of supporting high frequency signals in PCB.

### Solution to Problem

For achieving the object, the present invention provides the following embodiments.

### (Bonded Article)

[1] A bonded article including a functional group-carrying metal surface and a functional group-carrying resin surface, which are bonded directly to each other,
   the functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal,
   the functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.
[2] The bonded article according to the item [1], wherein a combination of the functional group of the functional group-carrying metal surface and the functional group of the functional group-carrying resin surface is at least one of the following items (1) to (8):
   (1) a combination of an amino group and an epoxy group,
   (2) a combination of a mercapto group and an epoxy group,
   (3) a combination of an isocyanato group and an amino group,
   (4) a combination of a mercapto group and a (meth)acryloyl group,
   (5) a combination of a mercapto group and an amino group,
   (6) a combination of a mercapto group and an alkenyl group,
   (7) a combination of an amino group and a (meth)acryloyl group, and
   (8) a combination of (meth)acryloyl groups.
[3] The bonded article according to the item [1], wherein the functional group-carrying metal surface has a functional group that is derived from one or more kind of a compound selected from the group consisting of an isocyanate compound, a thiol compound, an epoxy compound, an amino compound, and a (meth)acryloyl compound, and is imparted through reaction of one or more kind of the functional group selected from the group consisting of an amino group, an epoxy group, a mercapto group, a styryl group, a (meth)acryloyl group, an isocyanato group, and an alkenyl group, existing on the surface of the metal, with one or more kind of the compound selected from the group consisting of an isocyanate compound, a thiol compound, an epoxy compound, an amino compound, and a (meth)acryloyl compound.
[4] The bonded article according to the item [1], wherein the functional group-carrying resin surface has a functional group that is derived from one or more kind of a compound selected from the group consisting of an isocyanate compound, a thiol compound, an epoxy compound, an amino compound, and a (meth)acryloyl compound, and is imparted through reaction of one or more kind of the functional group selected from the group consisting of an amino group, an epoxy group, a mercapto group, a styryl group, a (meth)acryloyl group, an isocyanato group, and an alkenyl group, existing on the surface of the resin, with one or more kind of the compound selected from the group consisting of an isocyanate compound, a thiol compound, an epoxy compound, an amino compound, and a (meth)acryloyl compound.
[5] The bonded article according to any one of the items [1] to [4], wherein the metal is one or more kind selected from the group consisting of iron, copper, aluminum, magnesium, and titanium.
[6] The bonded article according to any one of the items [1] to [5], wherein the resin has one or more kind of a form selected from the group consisting of a block object, a film, a sheet, an FRP, and a prepreg.

### (Method for bonding Metal and Resin)

A method for bonding a metal and a resin, including bonding under pressure
a functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal, and
a functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.

The method for bonding a metal and a resin according to the item [7], wherein a combination of the functional group of the functional group-carrying metal surface and the functional group of the functional group-carrying resin surface is at least one of the following items (1) to (8):
(1) a combination of an amino group and an epoxy group,
(2) a combination of a mercapto group and an epoxy group,
(3) a combination of an isocyanato group and an amino group,
(4) a combination of a mercapto group and a (meth)acryloyl group,
(5) a combination of a mercapto group and an amino group,
(6) a combination of a mercapto group and an alkenyl group,
(7) a combination of an amino group and a (meth)acryloyl group, and
(8) a combination of (meth)acryloyl groups.

The method for bonding a metal and a resin according to the item [7] or [8], wherein the method includes reacting a metal having on a surface thereof one or more kind selected from the group consisting of a hydroxy group, a formyl group, a carboxy group, and a radical, with an alkoxysilane and/or a compound having one kind of a functional group selected from the group consisting of an amino group, an epoxy group, a mercapto group, an isocyanato group, and a radical reactive group, so as to form the functional group-carrying metal surface.

The method for bonding a metal and a resin according to the item [7] or [8], wherein the method includes reacting a resin having on a surface thereof one or more kind selected from the group consisting of a hydroxy group, a formyl group, a carboxy group, and a radical, with an alkoxysilane and/or a compound having one kind of a functional group selected from the group consisting of an amino group, an epoxy group, a mercapto group, an isocyanato group, and a radical reactive group, so as to form the functional group-carrying resin surface.

The method for bonding a metal and a resin according to the item [9] or [10], wherein the alkoxysilane is a silane coupling agent having one or more kind of a functional group selected from the group consisting of an amino group, an epoxy group, a mercapto group, a styryl group, a (meth)acryloyl group, and an isocyanato group.

The method for bonding a metal and a resin according to the item [9] or [10], wherein the compound having an amino group is at least one of an amino compound having a (meth)acryloyl group and an amino compound having a bifunctional or higher functional amino group.

The method for bonding a metal and a resin according to the item [9] or [10], wherein the compound having an epoxy group is one or more kind selected from the group consisting of an epoxy compound having a (meth)acryloyl group, an epoxy compound having an alkenyl group, and a bifunctional or higher functional epoxy compound.

The method for bonding a metal and a resin according to the item [9] or [10], wherein the compound having a mercapto group is a bifunctional or higher functional thiol compound.

The method for bonding a metal and a resin according to the item [9] or [10], wherein the compound having an isocyanato group is at least one of an isocyanato compound having a (meth)acryloyl group and a bifunctional or higher functional isocyanato compound.

The method for bonding a metal and a resin according to the item [9] or [10], wherein the compound having a radical reactive group is a compound having a (meth)acryloyl group.

The method for bonding a metal and a resin according to the item [7] or [8], wherein the method includes reacting a metal having on a surface thereof one or more kind of a functional group selected from the group consisting of an amino group, an epoxy group, a mercapto group, a styryl group, a (meth)acryloyl group, an isocyanato group, and an alkenyl group, with one or more kind of a compound selected from the group consisting of an isocyanate compound, a thiol compound, an epoxy compound, an amino compound, and a (meth)acryloyl compound, so as to form the functional group-carrying metal surface.

The method for bonding a metal and a resin according to the item [7] or [8], wherein the method includes reacting a resin having on a surface thereof one or more kind of a functional group selected from the group consisting of an amino group, an epoxy group, a mercapto group, a styryl group, a (meth)acryloyl group, an isocyanato group, and an alkenyl group, with one or more kind of a compound selected from the group consisting of an isocyanate compound, a thiol compound, an epoxy compound, an amino compound, and a (meth)acryloyl compound, so as to form the functional group-carrying resin surface.

The method for bonding a metal and a resin according to any one of the items [7] to [18], wherein the method includes cleaning at least one of the functional group-carrying metal surface and the functional group-carrying resin surface, before the bonding under pressure.

The method for bonding a metal and a resin according to any one of the items [7] to [19], wherein the bonding under pressure is performed under heat.

The method for bonding a metal and a resin according to any one of the items [7] to [20], wherein the metal is one or more kind selected from the group consisting of iron, copper, aluminum, magnesium, and titanium.

The method for bonding a metal and a resin according to any one of the items [7] to [21], wherein the resin has one or more kind of a form selected from the group consisting of a block object, a film, a sheet, an FRP, and a prepreg.

### Advantageous Effects of Invention

According to the present invention, a metal and a resin can be bonded with a sufficient bonding strength, and a bonding technique suitable for supporting high frequency signals in PCB can be provided.

### Description of Embodiments

The bonded article and the bonding method of the present invention will be described in detail below.

### <<Bonded Article>>

The bonded article of the present invention includes a functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal, and a functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin, which are bonded directly to each other.

At the surfaces that are bonded directly to each other, a bond between the functional groups occurs through a chemical bond, a hydrogen bond, and a van der Waals' force. The metal and the resin can be bonded with a sufficient bonding strength through the bonding forces without the use of an adhesive.

The bonding surface has a wide variety of properties depending on the combination of the functional groups and the conditions, such as the pressure in bonding, and the specific embodiment thereof cannot be comprehensively expressed. Therefore, it can be said that it is impossible or impractical to identify the bonded article of the present invention directly with the structure or the characteristics thereof.

### <Metal>

The kind of the metal having formed thereon the functional group-carrying metal surface is not particularly limited.

Examples thereof include iron, copper, aluminum, magnesium, and titanium. Among these, aluminum and/or copper are particularly preferably used from the standpoint of the light weight and the workability.

In the present invention, the term "aluminum" is used to encompass aluminum and alloys thereof. Similarly, iron, copper, aluminum, magnesium, and titanium each are used to encompass the elemental material thereof and alloys thereof.

### (Pretreatment)

Before imparting one or more kind of a functional group selected from the group consisting of an amino group, an epoxy group, a mercapto group, a styryl group, a (meth)acryloyl group, an isocyanato group, and an alkenyl group to the surface of the metal, the surface of the metal is preferably subjected to a pretreatment.

The pretreatment is preferably a treatment forming one or more kind selected from the group consisting of a hydroxy group, a formyl group, a carboxy group, and a radical. The hydroxy group, the formyl group, the carboxy group, and the radical each function as a base point in imparting the functional groups to the surface of the metal.

Examples of the pretreatment include cleaning with a solvent, a degreasing treatment, a polishing treatment, an etching treatment, a chemical treatment, a plasma treatment, a corona discharge treatment, and an UV ozone treatment. Among these, a pretreatment forming a hydroxy group on a surface is preferred for a copper foil having a non-roughened surface, or a copper foil plated with chromate or nickel. The treatments may be performed alone, or two or more kinds thereof may be performed. The specific methods of the pretreatments used may be known methods.

The properties of the surface having been subjected to the pretreatment in the aforementioned manner may be changed from immediately after the pretreatment due to the functional groups described later imparted to the surface-treated surface. Therefore, it is considered that it is impossible or impractical to express specifically the properties of the surface having been subjected to the pretreatment. Accordingly, in the present invention, the surface having been subjected to the pretreatment is identified by the method of the pretreatment.

The pretreatments dedicated to aluminum include a boehmite treatment, a zirconium treatment, an alumite treatment, and a zinc phosphate treatment, and as for metals, any of a laser treatment, a plasma treatment, a corona discharge treatment, and an UV ozone treatment is generally preferred, in which any of a plasma treatment, a corona discharge treatment, and an UV ozone treatment is preferred from the standpoint of generation of a hydroxy group.

Examples of the cleaning with a solvent and/or the degreasing treatment include a treatment of degreasing the surface of the material layer 2 with an organic solvent, such as acetone and toluene. The cleaning with a solvent and/or the degreasing treatment are preferably performed before the other surface treatments.

Examples of the polishing treatment include buffing with polishing cloth, roll polishing with polishing paper (sandpaper), and electropolishing.

The etching treatment applied may be a known etching treatment, such as a chemical etching treatment and an electrochemical etching treatment. The chemical etching treatment is not particularly limited, and examples thereof include a caustic soda method, a phosphoric acid-sulfuric acid method, a fluoride method, a chromic acid-sulfuric acid method, and a salt iron method. The electrochemical etching treatment is not particularly limited, and examples thereof include electrolytic etching method. Among these, the etching treatment is preferably performed by a caustic soda method, and is more preferably performed by a caustic soda method using a sodium hydroxide aqueous solution or a potassium hydroxide aqueous solution. Specifically, for example, it is preferred that at least a part of the aluminum material is dipped in a sodium hydroxide aqueous solution of 3% by mass to 20% by mass or a potassium hydroxide aqueous solution of 3% by mass to 20% by mass at a temperature of 20°C to 70°C for a period of 1 minute to 15 minutes, and then neutralized by dipping in a nitric acid aqueous solution of 5% by mass to 20% by mass, followed by washing with water and drying. In the caustic soda method, a chelating agent, an oxidizing agent, and a phosphate salt may be used as additives.

The chemical treatment is mainly to form a chemical film on the surface of the material layer 2.

Examples thereof include a boehmite treatment and a zirconium treatment.

In the boehmite treatment, the material layer 2 is subjected to a hydrothermal treatment to form a boehmite film on the surface of the material layer 2. A reaction accelerator, such as ammonia and triethanolamine, may be added to water. For example, it is preferred that the material layer 2 is dipped in hot water at 90 to 100°C containing triethanolamine in a concentration of 0.1 to 5.0% by mass for 3 seconds to 5 minutes.

In the zirconium treatment, the material layer 2 is dipped, for example, in a liquid containing a zirconium salt, such as zirconium phosphate, to form a film of a zirconium compound on the surface of the material layer 2. For example, it is preferred that the material layer 2 is dipped in a liquid of a chemical agent for a zirconium treatment (for example, "Palcoat 3762" and "Palcoat 3796", produced by Nihon Parkerizing Co., Ltd.) at 45 to 70°C for 0.5 to 3 minutes. The zirconium treatment is preferably performed after the etching treatment by the caustic soda method.

The plasma treatment is to render the material surface in a sensitive state through excitation of the molecules thereof by hitting the surface with a plasma beam created with a high voltage power supply and a rod, and examples thereof include an atmospheric plasma treatment method capable of applying hydroxy groups and polar groups onto the material surface.

Examples of the corona discharge treatment include a method applied to surface modification of a polymer film, which may be a method of generating hydroxy groups or polar groups on the surface from starting points, which are radicals generated through scission of the polymer main chain or side chain of the polymer surface layer with electrons emitted from an electrode.

The UV ozone treatment is a method of cleaning or modifying the surface with the energy of an ultraviolet ray having a short wavelength emitted from a low pressure mercury lamp and the power of ozone (O₃) generated thereby. For glass materials, the treatment may be one of surface cleaning methods for removing the organic impurities on the surface. In general, a surface cleaning and modifying equipment using a low pressure mercury lamp is referred to as an "UV ozone cleaner", an "UV cleaning device", or an "ultraviolet ray surface modifier".

The boehmite treatment applied to aluminum may be a known boehmite treatment. Specifically, for example, the aluminum material is subjected to a hydrothermal treatment to form a boehmite film on the surface. The boehmite is acicular crystals, and in prolonging the treatment time, the crystals grow to form a complicated shape.

Distilled water may be used in the boehmite treatment, and a reaction accelerator, such as ammonia and triethanolamine, may be added thereto. For example, it is preferred that distilled water having added thereto triethanolamine in a concentration of 0.1% by mass to 5.0% by mass is heated to hot water at 90°C to 100°C, and the material is dipped in the hot water for 3 seconds to 5 minutes to perform the boehmite treatment.

The aluminum material having been subjected to the boehmite treatment may be subjected directly to the subsequent treatment using a silane coupling agent, and may be subjected to the treatment using a silane coupling agent after degreasing or after subjecting to the etching treatment by the aforementioned caustic soda method.

The zirconium treatment applied to aluminum may be a known zirconium treatment or the like. The zirconium treatment is, for example, to form a zirconium salt film on the surface of the aluminum material with zirconium phosphate or a zirconium compound, such as a zirconium salt. Specific examples of the zirconium treatment include a method of performing a zirconium treatment by heating a chemical agent "Palcoat 3762" and "Palcoat 3796", produced by Nihon Parkerizing Co., Ltd., to 45°C to 70°C, and the material is dipped in the liquid for 0.5 to 3 minutes to perform the zirconium treatment. In the case where the zirconium treatment is performed, the zirconium treatment is preferably performed after performing the etching treatment by the caustic soda method.

The alumite treatment applied to aluminum may be a known alumite treatment. The alumite treatment is to form an aluminum oxide film by oxidizing of the surface of aluminum through electrolysis with the aluminum as an anode in a treatment bath, such as diluted sulfuric acid or oxalic acid.

The zinc phosphate treatment applied to aluminum may be a known zinc phosphate treatment. The zinc phosphate treatment is to form a film of zinc phosphate crystals on the metal surface through chemical reaction of a solution containing phosphate ion and zinc ion as major components.

### (Functional Group-imparting Treatment)

One or more kind of a functional group selected from the group consisting of an amino group, an epoxy group, a mercapto group, a styryl group, a (meth)acryloyl group, an isocyanato group, and an alkenyl group is imparted to the surface of the metal by the functional group-imparting treatment.

The functional group-imparting treatment may be performed by a method of reacting a hydroxy group, a formyl group, a carboxy group, and a radical existing on the surface of the metal, with an alkoxysilane, and/or a method of reacting a hydroxy group, a formyl group, a carboxy group, and a radical existing on the surface of the metal, with a compound having one kind of a functional group selected from the group consisting of an amino group, an epoxy group, a mercapto group, an isocyanato group, and a radical reactive group.

The hydroxy group, the formyl group, the carboxy group, and the radical spontaneously occur and exist on the surface of the metal or are formed thereon by the aforementioned pretreatment. It is more preferred that the metal having on the surface thereof one or more kind selected from the group consisting of a hydroxy group, a formyl group, a carboxy group, and a radical through the pretreatment is used, and one or more kind of a functional group selected from the group consisting of an amino group, an epoxy group, a mercapto group, a styryl group, a (meth)acryloyl group, an isocyanato group, and an alkenyl group is imparted to the surface thereof.

The compound having one kind of a functional group selected from the group consisting of an amino group, an epoxy group, a mercapto group, an isocyanato group, and a radical reactive group has, in addition to the aforementioned functional group, one or more kind of a functional group selected from the group consisting of an amino group, an epoxy group, a mercapto group, a styryl group, a (meth)acryloyl group, an isocyanato group, and an alkenyl group.

The treatment of imparting a functional group by the aforementioned method (which may be referred to as a functional group-imparting treatment) forms a self-assembled monolayer (SAM) having a two-dimensional structure on the surface of the metal.

### (Alkoxysilane)

Specific examples of the alkoxysilane include a silane coupling agent, and a compound that further has a functional group, such as an amino group, an epoxy group, a mercapto group, a styryl group, a (meth)acryloyl group, an isocyanato group, or an alkenyl group is preferred.

Specific examples of the silane coupling agent include vinyltrimethoxysilane and vinyltriethoxysilane, which each have a vinyl group, 2-(3,4-epoxycyclohexyl)ethyltrimethoxysilane, which has an epoxy group, 3-glycidoxypropylmethyldimethoxysilane, 3-glycidoxypropylmethyltrimethoxysilane, 3-glycidoxypropylmethyldiethoxysilane, 3-glycidoxypropylmethyldiethoxysilane, and 3 - glycidoxypropy 1 triethoxysilane, which each have a glycidyl group, p-styryltrimethoxysilane, which has a styryl group, 3-methacryloxypropylmethyldimethoxysilane, 3-methacryloxypropyltrimethoxysilane, 3-methacryloxypropylmethyldiethoxysilane, and 3-methacryloxypropyltriethoxysilane, which each have a methacryloyloxy group (methacryloxy group), 3-acryloxypropyltrimethoxysilane, which has an acryloyloxy group (acryloxy group), N-2-(aminoethyl)-3-aminopropylmethyldimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, and a hydrochloride of N-(vinylbenzyl)-2-aminopropyltrimethoxysilane, which each have an amino group, tris(trimethoxysilylpropyl) isocyanurate, which has an isocyanurate group, 3-ureidopropyltrialkoxysilane, which has an ureido group, 3-mercaptopropylmethyldimethoxysilane, which has a mercapto group, 3-isocyanatopropyltriethoxysilane, which has an isocyanato group, dithioltriazinepropyltriethoxysilane, which has a triazine-mercapto group, and 6-(triethoxysilylpropylamino)-1,3,5-triazine-2,4-dithiol monosodium salt (TES), which has an ethoxysilyl group and a mercapto group.

The method of imparting the functional group with the silane coupling agent is not particularly limited, and examples thereof include a spray coating method and a dipping method.

In the dipping method, the surface of the metal is brought into contact with a low concentration aqueous solution of the silane coupling agent or a low concentration organic solvent solution of the silane coupling agent, and thereby a hydroxy group existing on the surface of the metal is reacted with the silane coupling agent to form a silanol group, resulting in an oligomerized silanol group bonded to the surface of the metal. Specifically, for example, a diluted solution obtained by diluting the silane coupling agent with an organic solvent to a concentration of approximately 0.5% by mass to 50% by mass is heated to ordinary temperature to 100°C, and the material is dipped in the diluted solution for 1 minute to 5 days, thereby introducing a functional group chemically bonded to the surface of the metal.

In the spray coating method, the silane coupling agent itself or the silane coupling agent diluted with an organic solvent is sprayed on the surface of the metal, and then a drying treatment is performed at ordinary temperature to 100°C for 1 minute to 5 hours. A firm chemical bond can be formed through the drying treatment, and thereby a functional group chemically bonded to the surface of the metal can be introduced.

It is also effective that the surface having the functional group introduced with the silane coupling agent is cleaned with an alcohol, water, or the like. The silane coupling agent and a compound derived from the silane coupling agent existing with a weak absorption force on the functional group introduced via the chemical bond can be removed thereby, so as to enhance the strength of the bonded article.

### (Compound having Amino Group)

Specific examples of the compound having an amino group include an amino compound having a (meth)acryloyl group and an amino compound having two or more amino groups, as the compound having an amino group. The amino compound is not particularly limited, and examples thereof include (meth)acrylamide, ethylenediamine, 1,2-propanediamine, 1,3-propanediamine, 1,4-diaminobutane, hexamethylenediamine, 2,5-dimethyl-2,5-hexanediamine, 2,2,4-trimethylhexamethylenediamine, diethylenetriamine, triethylenetetramine, tetraethylenepentamine, pentaethylenehexamine, 4-aminomethyloctamethylenediamine, 3,3'-iminobis(propylamine), 3,3'-methyliminobis(propylamine), bis(3-aminopropyl) ether, 1,2-bis(3-aminopropyloxy)ethane, menthenediamine, isophoronediamine, bisaminomethylnorbornane, bis(4-aminocyclohexyl)methane, bis(4-amino-3-methylcyclohexyl)methane, 1,3-diaminocyclohexane, 3,9-bis(3-aminopropyl)-2,4,8,10-tetraoxaspiro[5,5]undecane, and aminoethylpiperaedine.

The method of treating with the compound having an amino group is not particularly limited, and examples thereof include a spray coating method and a dipping method. Specifically, for example, a diluted solution obtained by diluting the compound having an amino group with an organic solvent to a concentration of approximately 5% by mass to 50% by mass is heated to ordinary temperature to 100°C, and the material is dipped in the diluted solution for 1 minute to 5 days, and then taken out therefrom, followed by subjecting to a drying treatment at ordinary temperature to 100°C for 1 minute to 5 hours.

It is also effective that the surface having the functional group introduced with the compound having an amino group is cleaned with an organic solvent. The compound having an amino group and a compound derived from the compound having an amino group existing with a weak absorption force on the functional group introduced via the strong bond can be removed thereby, so as to enhance the strength of the bonded article.

### (Compound having Epoxy Group)

Specific examples of the compound having an epoxy group include an epoxy compound having a (meth)acryloyl group, an epoxy compound having an alkenyl group, and a bifunctional or higher functional epoxy compound. Examples thereof include glycidyl (meth)acrylate, allyl glycidyl ether, 1,6-hexanediol diglycidyl ether, and an epoxy resin having two or more epoxy groups in the molecule. An alicyclic epoxy compound may also be used, and examples thereof include 3,4-epoxycyclohexylmethyl methacrylate (Cyclomer M100, produced by Daicel Chemical Industries, Ltd.), 1,2-epoxy-4-vinylcyclohexane (Celloxide 2000, produced by Daicel Chemical Industries, Ltd.), and 3',4'-epoxycyclohexylmethyl-3,4-epoxycyclohexanecarboxylate (Celloxide 2021P, produced by Daicel Chemical Industries, Ltd.).

The method of imparting the functional group with the compound having an epoxy group is not particularly limited, and examples thereof include a spray coating method and a dipping method.

In the dipping method, the surface of the metal is brought into contact with a low concentration organic solvent solution of the compound having an epoxy group and an amine based or phosphorus based catalyst, and thereby a hydroxy group or the like existing on the surface of the metal is reacted with an epoxy group to impart a functional group. Specifically, for example, a diluted solution obtained by diluting the compound having an epoxy group with an organic solvent to a concentration of approximately 0.5% by mass to 50% by mass containing 0.5 to 5% by mass of the catalyst is heated to ordinary temperature to 100°C, and the material is dipped in the diluted solution for 1 minute to 5 days, thereby introducing a functional group chemically bonded to the surface of the metal.

In the spray coating method, the diluted solution obtained by diluting the compound having an epoxy group with an organic solvent to a concentration of approximately 0.5% by mass to 50% by mass containing 0.5 to 5% by mass is sprayed on the surface of the metal, and then a drying treatment is performed at ordinary temperature to 100°C for 1 minute to 5 hours. A firm chemical bond can be formed through the drying treatment, and thereby a functional group chemically bonded to the surface of the metal can be introduced.

A known amine based or phosphorus based catalyst may be used. The amine based catalyst is not particularly limited, and examples thereof include triethylenediamine, tetramethylguanidine, N,N,N',N'-tetramethylhexane-1,6-diamine, dimethyl ether amine, N,N,N',N",N"-pentamethyldipropylenetriamine, N-methylmorpholine, bis(2-dimethylaminoethyl) ether, dimethylaminoethoxyehtnaol, and triethylamine. The phosphorus based catalyst is not particularly limited, and examples thereof include triphenylphosphine, benzyltriphenylphosphonium chloride, and n-butyltriphenylphosphonium bromide.

It is also effective that the surface having the functional group introduced with the compound having an epoxy group is cleaned with an organic solvent or the like. The compound having an epoxy group and a compound derived from the compound having an epoxy group existing with a weak absorption force on the functional group introduced via the chemical bond can be removed thereby, so as to enhance the strength of the bonded article.

### (Compound having Mercapto Group)

Specific examples of the compound having a mercapto group include a bifunctional or higher functional thiol compound and a thiol compound having an alkenyl group.

The thiol compound is preferably a trifunctional or higher functional thiol compound and a compound having an alkenyl group in addition to a mercapto group. The thiol compound is not particularly limited, and examples thereof include pentaerythritol tetrakis(3-mercaptopropionate) (such as "QX40", produced by Mitsubishi Chemical Corporation, and "QE-340M", produced by Toray Fine Chemical Co., Ltd.), an ether based primary thiol (such as "Capcure 3-800", produced by Cognis GmbH), 1,4-bis(3-mercaptobutylyloxy)butane (such as "Karenz MT (registered trademark) BD1", produced by Showa Denko K.K.), pentaerythritol tetrakis(3-mercaptobutylate) (such as "Karenz MT (registered trademark) PE1", produced by Showa Denko K.K.), and 1,3,5-tris(3-mercaptobutyloxyethyl)-1,3,5-triazin-2,4,6-(1H,3H,5H)-trione (such as "Karenz MT (registered trademark) NR1", produced by Showa Denko K.K.). Among these, pentaerythritol tetrakis(3-mercaptobutylate) is excellent in stability in the epoxy resin.

The method of treating with the thiol compound is not particularly limited, and examples thereof include a spray coating method and a dipping method. Specifically, for example, a diluted solution obtained by diluting the thiol compound with an organic solvent to a concentration of approximately 5% by mass to 50% by mass is heated to ordinary temperature to 100°C, and the material is dipped in the diluted solution for 1 minute to 5 days, and then taken out therefrom, followed by subjecting to a drying treatment at ordinary temperature to 100°C for 1 minute to 5 hours. An amine compound as a catalyst may be added to the diluted solution of the thiol compound.

It is also effective that the surface having the functional group introduced with the thiol compound is cleaned with an organic solvent or the like. The thiol compound and a compound derived from the thiol compound existing with a weak absorption force on the functional group introduced via the chemical bond can be removed thereby, so as to enhance the strength of the bonded article.

### (Compound having Isocyanato Group)

Specific examples of the compound having an isocyanato group include an isocyanato compound having a (meth)acryloyl group and a bifunctional or higher functional isocyanato compound. The isocyanate compound is not particularly limited, and examples thereof include 2-isocyanatoethyl methacrylate (such as "Karenz MOI (registered trademark)", produced by Showa Denko K.K.), 2-isocyanatoethyl acrylate (such as "Karenz AOI (registered trademark)", produced by Showa Denko K.K.), and 1,1-(bisacryloyloxyethyl)ethyl isocyanate (such as "Karenz BEI (registered trademark)", produced by Showa Denko K.K.), which each are an isocyanate compound having a (meth)acryloyl group, and diphenylmethane diisocyanate (MDI), hexamethylene diisocyanate (HDI), tolylene diisocyanate (TDI), and isophorone diisocyanate (IPDI), which each are a polyfunctional isocyanate.

The method of treating with the isocyanate compound is not particularly limited, and examples thereof include a spray coating method and a dipping method. Specifically, for example, a diluted solution obtained by diluting the isocyanate compound with an organic solvent to a concentration of approximately 5% by mass to 50% by mass is heated to ordinary temperature to 100°C, and the material is dipped in the diluted solution for 1 minute to 5 days, and then taken out therefrom, followed by subjecting to a drying treatment at ordinary temperature to 100°C for 1 minute to 5 hours.

It is also effective that the surface having the functional group introduced with the isocyanate compound is cleaned with an organic solvent or the like. The isocyanate compound and a compound derived from the isocyanate compound existing with a weak absorption force on the functional group introduced via the chemical bond can be removed thereby, so as to enhance the strength of the bonded article.

### (Compound having Radical Reactive Group)

In the description herein, the "radical reactive group" means a functional group that reacts with a radical, and is preferably a functional group having an ethylenic carbon-carbon double bond. Specific examples of the radical reactive group include a methacryloyl group, an acryloyl group, a vinyl group, and an alkenyl group, while not limited to the groups.

Specific examples of the compound having a radical reactive group include a compound that has a hydroxy group, a carboxy group, an isocyanato group, a styryl group, or the like, and further has a (meth)acryloyl group or an alkenyl group. Examples thereof also include glycidyl (meth)acrylate having a glycidyl group, (meth)acrylamide having an amino group, a hydroxymethyl (meth)acrylate having a hydroxy group, (meth)acrylic acid having a carboxy group, 2-isocyanatoethyl methacrylate (such as "Karenz MOI (registered trademark)", produced by Showa Denko K.K.), and 2-isocyanatoethyl acrylate (such as "Karenz AOI (registered trademark)", produced by Showa Denko K.K.). A bifunctional or higher functional (meth)acrylate and a compound having an end styryl group, such as divinylbenzene, may also be used.

The method of treating with the compound having a radical reactive group is not particularly limited, and examples thereof include a spray coating method and a dipping method. Specifically, for example, a diluted solution obtained by diluting the compound having a radical reactive group with an organic solvent to a concentration of approximately 5% by mass to 50% by mass is heated to ordinary temperature to 100°C, and the material is dipped in the diluted solution for 1 minute to 5 days, and then taken out therefrom, followed by subjecting to a drying treatment at ordinary temperature to 100°C for 1 minute to 5 hours.

It is also effective that the surface having the functional group introduced with the compound having a radical reactive group is cleaned with an organic solvent or the like. The compound having a radical reactive group and a compound derived from the compound having a radical reactive group existing with a weak absorption force on the functional group introduced via the chemical bond can be removed thereby, so as to enhance the strength of the bonded article.

### (Functional Group-extending Treatment)

The surface of the metal after subjecting to the functional group-imparting treatment has the SAM having a two-dimensional structure as described above, and the SAM having a two-dimensional structure can be extended in the three-dimensional direction by the functional group-extending treatment below.

The functional group-extending treatment herein means a treatment of reacting the metal having a surface having imparted thereon one or more kind of a functional group selected from the group consisting of an amino group, an epoxy group, a mercapto group, a styryl group, a (meth)acryloyl group, an isocyanato group, and an alkenyl group through the functional group-imparting treatment, with one or more kind of a compound selected from the group consisting of an isocyanate compound, a thiol compound, an epoxy compound, an amino compound, and a (meth)acryloyl compound.

In the case where an amino group is imparted to the metal surface through the functional group-imparting treatment, the functional group structure on the metal surface can be extended in the three-dimensional direction by reacting an isocyanate compound having an isocyanato group and another functional group, an epoxy compound having an epoxy group and another functional group, or the like with the amino group.

For example, in the case where 2-isocyanatoethyl methacrylate (such as "Karenz MOI (registered trademark)", produced by Showa Denko K.K.), which is an isocyanate compound having a radical reactive group, or glycidyl methacrylate is reacted with the amino group, a radically polymerizable (meth)acryloyl group is formed at the end of the three-dimensional extension.

In the case where a (meth)acryloyl group is imparted to the metal surface through the functional group-imparting treatment, the functional group structure on the metal surface can be extended in the three-dimensional direction by reacting a thiol compound having a mercapto group and another mercapto group or another functional group or the like with the (meth)acryloyl group.

For example, in the case where 1,4-bis(3-mercaptobutylyloxy)butane (such as "Karenz MT (registered trademark) BD1", produced by Showa Denko K.K.), which is a bifunctional thiol compound, or pentaerythritol tetrakis(3-mercaptobutylate) (such as "Karenz MT (registered trademark) PE1", produced by Showa Denko K.K.), which is a trifunctional thiol compound, is reacted with the (meth)acryloyl group, a mercapto group is formed at the end of the three-dimensional extension. The mercapto group can undergo addition reaction with an epoxy group and a (meth)acryloyl group.

In the case where an epoxy group is imparted to the metal surface through the functional group-imparting treatment, the functional group structure on the metal surface can be extended in the three-dimensional direction by reacting an amino compound having an amino group and another amino group, a thiol compound having a mercapto group and another mercapto group or another functional group, or a compound having a carboxy group and another carboxy group or another functional group with the epoxy group.

For example, in the case where (meth)acrylic acid is reacted with the epoxy group of the silane coupling agent, a radically polymerizable (meth)acryloyl group is formed at the end of the three-dimensional extension.

In the case where a mercapto group is imparted to the metal surface through the functional group-imparting treatment, the functional group structure on the metal surface can be extended in the three-dimensional direction by reacting a compound having a (meth)acryloyl group and another functional group with the mercapto group.

For example, in the case where the methacryloyl group of Karenz MOI (registered trademark) is reacted with the mercapto group, an isocyanato group is formed at the end of the three-dimensional extension, and in the case where the (meth)acryloyl group of (meth)acrylamide is reacted with the mercapto group, an amino group is formed at the end of the three-dimensional extension. In the case where the (meth)acryloyl group of glycidyl (meth)acrylate is reacted with the mercapto group, an epoxy group is formed at the end of the three-dimensional extension.

Various functional groups can be formed at the end of the three-dimensional extension in this manner. In addition to the compounds described above, for example, in the case where a diisocyanate compound is reacted, it can be expected that only one isocyanato group is reacted to make an end isocyanato group, and in the case where a diamine is reacted, it can be expected that only one amino group is reacted to make an end amino group.

Examples of the method of the functional group-extending treatment include a dipping method and a spraying method.

In the dipping method, the metal surface after subjecting to the functional group-imparting treatment may be brought into contact with a low concentration organic solvent solution of the isocyanate compound with a catalyst, such as a tertiary amine, the thiol compound, the epoxy compound, the amino compound, or the (meth)acrylic compound, at 25°C to 120°C, so as to extend the functional group structure on the metal surface in the three-dimensional direction.

In the spraying method, an organic solvent solution of the isocyanate compound with a catalyst, such as a tertiary amine, the thiol compound, the epoxy compound, the amino compound, or the (meth)acrylic compound may be sprayed on the metal surface after subjecting to the functional group-imparting treatment, and then a drying treatment is performed at ordinary temperature to 100°C for 1 minute to 5 hours. According to the treatment, the functional group structure on the metal surface can be extended in the three-dimensional direction.

The isocyanate compound, the thiol compound, the epoxy compound, the amino compound, and the (meth)acrylic compound used in the functional group-extending treatment may be the same as the compounds used in the functional group-imparting treatment.

### <Resin>

The resin having formed thereon the functional group-carrying resin surface is preferably a thermoplastic resin or a thermosetting resin (cured product). The resin may be a known resin alone, and a resin reinforced with glass fibers or carbon fibers, such as FRP. The resin as an article to be bonded may be a member having been molded in advance.

The kind of the resin is not particularly limited, and an ordinary synthetic resin may be used. Examples thereof include PTFE (polytetrafluoroethylene), LCP (liquid crystal polymer), PPE (polyphenylene ether), and a Low-k material (such as a low dielectric epoxy resin), which are used in combination with a copper foil having a low roughness degree in a high frequency printed circuit board that is demanded to have a low dielectric constant or a low dielectric tangent, and examples thereof in the automobile field include general-purpose resins, such as polypropylene (PP), a polycarbonate (PC) resin, a polyester resin, polyamide (PA), a polybutylene terephthalate (PBT) resin, and a polyether imide (PEI) resin, and engineering plastics and super engineering plastics, such as modified polyphenylene ether (m-PPE) and polyphenylene sulfide (PPS). FRP and a thermosetting resin may also be used. FRP means a composite material including fibers, such as glass fibers or carbon fibers, inserted into plastics for enhancing the strength.

The FRP may be formed through hand lay-up molding or filament winding molding of a resin and a woven fabric or a nonwoven fabric using glass fibers, carbon fibers, aramid fibers, or the like. A sheet molding compound (SMC) or a bulk molding compound (BMC) may also be used.

The sheet molding compound (SMC) is a molding material in a sheet form obtained by mixing an unsaturated polyester resin and/or a vinyl ester resin, a polymerizable unsaturated monomer, a curing agent, a low shrinkage agent, and a filler, and further adding a fiber reinforcing material thereto. The bulk molding compound (BMC) is a molding material in a bulk form. These molding materials may be molded into a target molded article by such a molding method as compression molding, transfer molding, or injection molding.

The resin is preferably one or more kind selected from the group consisting of a block object, a film, a sheet, an FRP, and a prepreg.

The resin may be in a film form, and for example, may be a coated film with a coating composition.

The coated film herein means a film formed by coating a coating composition containing a pigment, a resin, an additive, and a solvent. The coated film can be formed by coating a coating composition and then drying.

### (Functional Group-imparting Treatment)

The method of imparting one or more kind of a functional group selected from the group consisting of an amino group, an epoxy group, a mercapto group, a styryl group, a (meth)acryloyl group, an isocyanato group, and an alkenyl group to the surface of the resin is preferably a method of reacting the resin having on the surface thereof one or more kind selected from the group consisting of a hydroxy group, a formyl group, a carboxy group, and a radical through a pretreatment, such as a plasma treatment, a corona discharge treatment, or an UV ozone treatment, with an alkoxysilane and/or a compound having one kind of a functional group selected from the group consisting of an epoxy group, an isocyanato group, an amino group, and a radical reactive group. The details of the pretreatment may be the same as the pretreatment of the metal surface.

A SAM having a two-dimensional structure is formed on the surface of the resin through the functional group-imparting treatment.

The alkoxy silane, the compound having an epoxy group, the compound having an isocyanato group, the compound having an amino group, and the compound having a radical reactive group used in the functional group-imparting treatment are the same as in the functional group-imparting treatment of the metal, and therefore the descriptions thereof are omitted herein.

### (Functional Group-extending Treatment)

The surface of the resin after subjecting to the functional group-imparting treatment has the SAM having a two-dimensional structure as described above, and the SAM having a two-dimensional structure can be extended in the three-dimensional direction by the functional group-extending treatment below.

The isocyanate compound, the thiol compound, the epoxy compound, the amino compound, and the (meth)acryloyl compound used in the functional group-extending treatment are the same as in the functional group-imparting treatment of the metal, and therefore the descriptions thereof are omitted herein.

### <<Bonding Method>>

The bonding method of the present invention is a method for bonding a metal and a resin, including bonding under pressure a functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal, and a functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.

The method of bonding under pressure may be any method, as far as the functional group on the metal surface and the functional group on the resin surface can be brought close to each other by approximately 3 Å or less.

In the case where the functional group on the metal surface and the functional group on the resin surface are brought close to each other by approximately 3 Å or less, a bond is formed through a chemical bond, a hydrogen bond, or a van der Waals' force of the functional groups. According to the mechanism, the metal and the resin can be bonded with a sufficient bonding strength without the use of an adhesive.

Examples of the method of bonding under pressure include pressing, and since the temperature thereon is preferably increased, the method is more preferably bonding under pressure and heat defined in JIS Z3001 4.6.416402 (in which plural base materials are brought into contact with each other at a suitable temperature lower than the melting point of the base material under application of pressure, so as to cause plastic deformation, and the base materials are bonded to each other through contact of the surfaces).

The pressure in bonding under pressure may be a pressure in a range where the resin is not collapsed.

The combination of the functional group on the functional group-carrying metal surface and the functional group on the functional group-carrying resin surface is preferably a combination that expects to provide a hydrogen bond or a chemical bond, and more preferably at least one of the following items (1) to (8). A firm bond can be expected by at least one of the following items (1) to (8). In the following items (1) to (8), the "combination of A and B" encompasses both the case where "the functional group on the functional group-carrying metal surface is A, and the functional group on the functional group-carrying resin surface is B", and the case where "the functional group on the functional group-carrying metal surface is B, and the functional group on the functional group-carrying resin surface is A".
(1) A combination of an amino group and an epoxy group
(2) A combination of a mercapto group and an epoxy group
(3) A combination of an isocyanato group and an amino group
(4) A combination of a mercapto group and a (meth)acryloyl group
(5) A combination of a mercapto group and an amino group
(6) A combination of a mercapto group and an alkenyl group
(7) A combination of an amino group and a (meth)acryloyl group
(8) A combination of (meth)acryloyl groups

Before bonding under pressure, at least one of the functional group-carrying metal surface and the functional group-carrying resin surface may be cleaned, and thereby the compounds remaining with a weak absorption force on the functional group can be removed, so as to enhance the strength of the bonded article.

In the case where the functional group-carrying metal surface and/or the functional group-carrying resin surface is subjected to the functional group-extending treatment after subjecting to the functional group-imparting treatment, so as to extend the functional group on the surface in the three-dimensional direction, the bonding can be performed under a more moderate condition in some cases. While depending on the combination of the functional groups, for example, the temperature in bonding under pressure by pressing can be decreased in some cases.

### Examples

Specific examples of the present invention will be described, but the present invention is not particularly limited to the examples.

### [Preparation of Thermoplastic Resin Material for Test Piece]

Thermoplastic resin materials for a test piece for a tensile test, i.e., a PP resin, a PA6 resin, a PA66 resin, a m-PPE resin, a PPS resin, a PEI resin, a PC resin, and a PBT resin, (10 mm × 45 mm × 3 mm) were obtained by using an injection molding machine (SE100V, produced by Sumitomo Heavy Industries, Ltd.) under the condition shown in Table 1 below.

**Table 1**

| Resin | Manufacturer | Model No. | Cylinder temperature | Mold temperature | Injection speed | Pressure keeping | Cooling time |
|---|---|---|---|---|---|---|---|
| | | | (°C) | (°C) | mm/sec | (MPa/sec) | (see) |
| PP | SunAllomer | TRC104N | 210 | 30 | 50 | 195/7 | 10 |
| PA6 (GF 30 wt%) | DSM | Novamid | 270 | 80 | 50 | 100/4 | 15 |
| PA66 (GF 30 wt%) | DSM | Novamid | 290 | 80 | 50 | 100/4 | 15 |
| m-PPE | SABIC | NORYL-731 | 290 | 120 | 50 | 150/15 | 15 |
| PPS | DIC | FZ-2140 | 310 | 140 | 50 | 100/3 | 15 |
| PEI | SABIC | Ultem1040 | 350 | 150 | 50 | 160/13 | 15 |
| PC | SABIC | Makrolom2405 | 280 | 80 | 100 | 130/10.4 | 30 |
| PBT (GF 30 wt%) | SABIC | VOLOX507 | 270 | 100 | 65 | 120/5 | 15 |

### <Example 1>

### [Pretreatment of Aluminum]

An aluminum plate (A6063) having a rectangular shape in planar view with a size of 25 mm × 100 mm and a thickness of 1.6 mm (aluminum article) was subjected to a chemical treatment by dipping in a sodium hydroxide aqueous solution having a concentration of 5% by mass for 1.5 minutes, and then subjecting to a neutralization treatment in a nitric acid aqueous solution having a concentration of 5% by mass, followed by washing with water and drying.

### [Functional Group-imparting Treatment of Aluminum: Treatment with Silane Coupling Agent]

Subsequently, the chemically treated aluminum plate was dipped in a silane coupling agent solution at 70°C obtained by dissolving 0.5 g of 3-aminopropyltrimethoxysilane (KBM-903, produced by Shin-Etsu Silicone Co., Ltd., silane coupling agent) in 100 g of industrial ethanol, for 5 minutes, then taking the aluminum plate out therefrom, and cleaned with ethanol, so as to provide an aluminum plate having an amino group imparted to the surface thereof.

### [Functional Group-imparting Treatment of PC (Polycarbonate): Treatment with Silane Coupling Agent]

The PC plate shown in Table 1 was subjected to a plasma treatment (Openair Plasma Generator FG5001, produced by Plasmatreat Corporation, radiation distance: 15 mm, feed rate: 5 m/min), and then immediately the PC plate was dipped in a silane coupling agent solution at 70°C obtained by dissolving 0.5 g of 3-glycidoxytrimethoxysilane (KBM-403, produced by Shin-Etsu Silicone Co., Ltd., silane coupling agent) in 100 g of industrial ethanol, for 5 minutes, then taking the PC plate out therefrom, and cleaned with ethanol, so as to provide a PC plate having an epoxy group imparted to the surface thereof.

### <Comparative Example 1>

An aluminum plate and a PC plate were prepared by performing the same procedure as in Example 1 except that the functional group-imparting treatment of aluminum in Example 1 was not performed.

### <Example 2>

### [Pretreatment of Copper]

A copper plate having a rectangular shape in planar view with a size of 25 mm × 100 mm and a thickness of 1.6 mm was degreased with acetone. Subsequently, the copper plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Copper: Treatment with Silane Coupling Agent]

Subsequently, the plasma treated copper plate was dipped in a silane coupling agent solution at 70°C obtained by dissolving 0.5 g of 3-aminopropyltrimethoxysilane (KBM-903, produced by Shin-Etsu Silicone Co., Ltd., silane coupling agent) in 100 g of industrial ethanol, for 5 minutes, then taking the copper plate out therefrom, and cleaned with ethanol, so as to provide a copper plate having an amino group imparted to the surface thereof.

[Functional Group-imparting Treatment of m-PPE (Modified Polyphenylene Ether): Treatment with Silane Coupling Agent] The m-PPE plate shown in Table 1 was subjected to an UV ozone treatment (Desktop Surface Treater PL16-110 (lamp: SUV110GS-36), produced by Sen Engineering Co., Ltd., radiation distance: 50 mm, radiation time: 1 minute), and then immediately was dipped in a silane coupling agent solution at 70°C obtained by dissolving 0.5 g of 3-glycidoxytrimethoxysilane (KBM-403, produced by Shin-Etsu Silicone Co., Ltd., silane coupling agent) in 100 g of industrial ethanol, for 5 minutes, then taking the m-PPE plate out therefrom, and cleaned with ethanol, so as to provide a m-PPE plate having an epoxy group imparted to the surface thereof.

### <Comparative Example 2>

A copper plate and a m-PPE plate were prepared by performing the same procedure as in Example 2 except that the functional group-imparting treatment of m-PPE with the silane coupling agent in Example 2 was not performed.

### <Example 3>

### [Pretreatment of SUS-304]

SUS-304 having a rectangular shape in planar view with a size of 25 mm × 100 mm and a thickness of 1.6 mm was degreased with acetone. Subsequently, the stainless steel plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of SUS-304: Treatment with Silane Coupling Agent]

Subsequently, the plasma treated stainless steel plate was dipped in a silane coupling agent solution at 70°C obtained by dissolving 0.5 g of 3-methacryloxypropyltrimethoxysilane (KBM-503, produced by Shin-Etsu Silicone Co., Ltd., silane coupling agent) in 100 g of industrial ethanol, for 5 minutes, then taking the stainless steel plate out therefrom, and cleaned with ethanol, so as to provide a stainless steel plate having a methacryloyl group imparted to the surface thereof.

### [Functional Group-extending Treatment of SUS-304: Treatment with Thiol Compound]

Subsequently, the stainless steel plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### [Functional Group-imparting Treatment of PEI (Polyether Imide): Treatment with MOI]

The PEI plate shown in Table 1 was subjected to a corona discharge treatment (KCA-4A, produced by Kasuga Denki, Inc., output: 105 W, electrode distance: 1.0 mm, feed rate: 1.0 mm/min), and then immediately was dipped in a solution at 70°C obtained by dissolving 1.2 g of 2-isocyanatoethyl methacrylate (Karenz MOI (registered trademark), produced by Showa Denko K.K.) and 0.05 g of 2,4,6-tris(dimethylaminomethyl)phenol (DMP-30) in 150 g of toluene, for 5 minutes, then taking out therefrom, and cleaned with toluene, and dried , so as to provide a PEI plate having a methacryloyl group imparted to the surface thereof.

### <Comparative Example 3>

A SUS-304 plate and a PEI plate were prepared by performing the same procedure as in Example 3 except that the functional group-imparting treatment of PEI with MOI in Example 3 was not performed.

### <Example 4>

### [Pretreatment of Iron]

Iron having a rectangular shape in planar view with a size of 25 mm × 100 mm and a thickness of 1.6 mm was degreased with acetone. Subsequently, the iron plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Iron: Treatment with MOI]

Immediately after the plasma treatment, the iron plate was dipped in a solution at 70°C obtained by dissolving 1.2 g of 2-isocyanatoethyl methacrylate (Karenz MOI (registered trademark), produced by Showa Denko K.K.) and 0.05 g of 2,4,6-tris(dimethylaminomethyl)phenol (DMP-30) in 150 g of toluene, for 5 minutes, then taking out therefrom, and cleaned with toluene, and dried, so as to provide an iron plate having a methacryloyl group imparted to the surface thereof.

### [Functional Group-extending Treatment of Iron: Treatment with Thiol Compound]

Subsequently, the iron plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### [Functional Group-imparting Treatment of PPS (Polyphenylene Sulfide): Treatment with MOI]

The PPS plate shown in Table 1 was subjected to a corona discharge treatment (KCA-4A, produced by Kasuga Denki, Inc., output: 105 W, electrode distance: 1.0 mm, feed rate: 1.0 mm/min), and then immediately was dipped in a solution at 70°C obtained by dissolving 1.2 g of 2-isocyanatoethyl methacrylate (Karenz MOI (registered trademark), produced by Showa Denko K.K.) and 0.05 g of 2,4,6-tris(dimethylaminomethyl)phenol (DMP-30) in 150 g of toluene, for 5 minutes, then taking out therefrom, and cleaned with toluene, and dried, so as to provide a PPS plate having a methacryloyl group imparted to the surface thereof.

### <Comparative Example 4>

An iron plate and a PPS plate were prepared by performing the same procedure as in Example 4 except that the functional group-imparting treatment with MOI and the thiol compound treatment of the iron plate in Example 4 were not performed.

### <Example 5>

### [Pretreatment of Magnesium]

Magnesium having a rectangular shape in planar view with a size of 25 mm × 100 mm and a thickness of 1.6 mm was degreased with acetone. Subsequently, the magnesium plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Magnesium: Treatment with Silane Coupling Agent]

Subsequently, the plasma treated magnesium plate was dipped in a silane coupling agent solution at 70°C obtained by dissolving 0.5 g of 3-methacryloxypropyltrimethoxysilane (KBM-503, produced by Shin-Etsu Silicone Co., Ltd., silane coupling agent) in 100 g of industrial ethanol, for 5 minutes, then taking the magnesium plate out therefrom, and cleaned with ethanol, so as to provide a magnesium plate having a methacryloyl group imparted to the surface thereof.

### [Functional Group-extending Treatment of Magnesium: Treatment with Thiol Compound]

Subsequently, the magnesium plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### [Functional Group-imparting Treatment of PA6 (Nylon 6): Treatment with MOI]

The PA6 (GF 30 wt%) plate shown in Table 1 was subjected to a plasma treatment (Openair Plasma Generator FG5001, produced by Plasmatreat Corporation, radiation distance: 15 mm, feed rate: 5 m/min), and then immediately was dipped in a solution at 70°C obtained by dissolving 1.2 g of 2-isocyanatoethyl methacrylate (Karenz MOI (registered trademark), produced by Showa Denko K.K.) and 0.05 g of 2,4,6-tris(dimethylaminomethyl)phenol (DMP-30) in 150 g of toluene, for 5 minutes, then taking out therefrom, and cleaned with toluene, and dried, so as to provide a PA6 plate having a methacryloyl group imparted to the surface thereof.

### [Functional Group-extending Treatment of PA6: Treatment with Thiol Compound]

Subsequently, the PA6 plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### <Comparative Example 5>

A magnesium plate and a PA6 plate were prepared by performing the same procedure as in Example 5 except that the functional group-imparting treatment with KBM-503 and the thiol compound treatment of the magnesium plate in Example 5 were not performed.

### <Example 6>

### [Pretreatment of Titanium]

Titanium having a rectangular shape in planar view with a size of 25 mm × 100 mm and a thickness of 1.6 mm was degreased with acetone. Subsequently, the titanium plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Titanium: Treatment with MOI]

Subsequently, the plasma treated titanium plate was dipped in a solution at 70°C obtained by dissolving 1.2 g of 2-isocyanatoethyl methacrylate (Karenz MOI (registered trademark), produced by Showa Denko K.K.) in 100 g of industrial ethanol, for 5 minutes, then taking the titanium plate out therefrom, and cleaned with ethanol, so as to provide a titanium plate having a methacryloyl group imparted to the surface thereof.

### [Functional Group-imparting Treatment of PP: Treatment with KBM-503]

The PP plate shown in Table 1 was subjected to a plasma treatment (Openair Plasma Generator FG5001, produced by Plasmatreat Corporation, radiation distance: 15 mm, feed rate: 5 m/min), and then immediately the plasma treated PP plate was dipped in a silane coupling agent solution at 70°C obtained by dissolving 0.5 g of 3-methacryloxypropyltrimethoxysilane (KBM-503, produced by Shin-Etsu Silicone Co., Ltd., silane coupling agent) in 100 g of industrial ethanol, for 5 minutes, then taking the PP plate out therefrom, and cleaned with ethanol, so as to provide a PP plate having a methacryloyl group imparted to the surface thereof.

### <Comparative Example 6>

A titanium plate and a PP plate were prepared by performing the same procedure as in Example 6 except that the MOI treatment of the titanium plate in Example 6 was not performed.

### <Example 7>

### [Pretreatment of Aluminum]

An aluminum plate (A6063) having a rectangular shape in planar view with a size of 25 mm × 100 mm and a thickness of 1.6 mm was degreased with acetone. Subsequently, the aluminum plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Aluminum: Treatment with Silane Coupling Agent]

Immediately after the plasma treatment, the plasma treated aluminum plate was dipped in a silane coupling agent solution at 70°C obtained by dissolving 0.5 g of 3-aminopropyltrimethoxysilane (KBM-903, produced by Shin-Etsu Silicone Co., Ltd., silane coupling agent) in 100 g of industrial ethanol, for 5 minutes, then taking the aluminum plate out therefrom, and cleaned with ethanol, so as to provide an aluminum plate having an amino group imparted to the surface thereof.

### [Functional Group-imparting Treatment of PBT: Treatment with Silane Coupling Agent]

PBT was subjected to an UV ozone treatment (Desktop Surface Treater PL16-110 (lamp: SUV110GS-36), produced by Sen Engineering Co., Ltd., radiation distance: 50 mm, radiation time: 1 minute), and then the UV ozone treated PBT plate was dipped in a silane coupling agent solution at 70°C obtained by dissolving 0.5 g of 3-methacryloxypropyltrimethoxysilane (KBM-503, produced by Shin-Etsu Silicone Co., Ltd., silane coupling agent) in 100 g of industrial ethanol, for 5 minutes, then taking the PBT plate out therefrom, and cleaned with ethanol, so as to provide a PBT plate having a methacryloyl group imparted to the surface thereof.

### [Functional Group-extending Treatment of PBT: Treatment with Thiol Compound]

Subsequently, the PBT plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### <Comparative Example 7>

An aluminum plate and a PBT plate were prepared by performing the same procedure as in Example 7 except that the functional group-imparting treatment of PBT in Example 7 was not performed.

### <Example 8>

### [Pretreatment of Copper]

A copper plate having a rectangular shape in planar view with a size of 25 mm × 100 mm and a thickness of 1.6 mm was degreased with acetone. Subsequently, the copper plate degreased with acetone was subjected to a plasma treatment (Openair Plasma Generator FG5001, produced by Plasmatreat Corporation, radiation distance: 15 mm, feed rate: 5 m/min).

### [Functional Group-imparting Treatment of Copper: Treatment with Silane Coupling Agent]

Immediately after the plasma treatment, the plasma treated copper plate was dipped in a silane coupling agent solution at 70°C obtained by dissolving 0.5 g of 3-aminopropyltrimethoxysilane (KBM-903, produced by Shin-Etsu Silicone Co., Ltd., silane coupling agent) in 100 g of industrial ethanol, for 5 minutes, then taking the copper plate out therefrom, and cleaned with ethanol, so as to provide a copper plate having an amino group imparted to the surface thereof.

Subsequently, the copper plate was dipped in a solution at 70°C obtained by dissolving 0.6 g of 1,4-bis(3-mercaptobutylyloxy)butane (Karenz MT (registered trademark) BD1, produced by Showa Denko K.K.) as a bifunctional thiol compound and 0.05 g of 2,4,6-tris(dimethylaminomethyl)phenol (DMP-30) in 150 g of toluene, for 10 minutes, then taking out therefrom, cleaned with toluene, and dried. The functional group structure on the functional group-imparted surface was extended in the three-dimensional direction in this manner.

### [Functional Group-imparting Treatment of PA66 (Nylon 66): Treatment with Silane Coupling Agent]

Subsequently, PA66 (GF 30 wt%) was subjected to an UV ozone treatment (Desktop Surface Treater PL16-110 (lamp: SUV110GS-36), produced by Sen Engineering Co., Ltd., radiation distance: 50 mm, radiation time: 1 minute), and then the UV ozone treated PA66 plate was dipped in a silane coupling agent solution at 70°C obtained by dissolving 0.5 g of 3-glycidoxypropyltrimethoxysilane (KBM-403, produced by Shin-Etsu Silicone Co., Ltd., silane coupling agent) in 100 g of industrial ethanol, for 5 minutes, then taking the PA66 plate out therefrom, and cleaned with ethanol, so as to provide a PA66 plate having an epoxy group imparted to the surface thereof.

### <Comparative Example 8>

A copper plate and a PA66 plate were prepared by performing the same procedure as in Example 7 except that the functional group-imparting treatment of PA66 in Example 8 was not performed.

### [Evaluation of Bonding Strength of Metal-Resin Bonded Article]

The functional group-imparted surfaces of the metal material and the resin material obtained in each of Examples 1 to 8 and Comparative Examples 1 to 8 were joined and held with a binder clip (width: 15 mm), and bonded at the temperature and the time shown in Table 2 or 3. The resulting metal-resin bonded article was subjected to a tensile shear adhesion strength test according to ISO 19095 1-4 with a tensile tester (Universal Testing Machine Autograph "AG-IS", produced by Shimadzu Corporation, load cell: 10 kN, tensile rate: 10 mm/min, temperature: 23°C, 50%RH). The measurement results are shown in Tables 2 and 3 below.

**Table 2**

| | Example 1 | Example 2 | Example 3 | Example 4 | Example 5 | Example 6 | Example 7 | Example 8 |
|---|---|---|---|---|---|---|---|---|
| Metal species | aluminum | copper | stainless steel | iron | magnesium | titanium | aluminum | copper |
| Pretreatment | chemical treatment | acetone degreasing + plasma treatment | acetone degreasing + plasma treatment | acetone degreasing + plasma treatment | acetone degreasing + plasma treatment | acetone degreasing + plasma treatment | acetone degreasing + plasma treatment | acetone degreasing + plasma treatment |
| Functional group | KBM-903 end amino group | KBM-903 end amino group | KBM-503 end methacryloyl group + BD 1 end mercapto group | MOI end methacryloyl group + BD 1 end mercapto group | KBM-503 end methacryloyl group + BD 1 end mercapto group | MOI end methacryloyl group | KBM-903 end amino group | KBM-903 end amino group + BD1 end mercapto group |
| Resin species | PC | m-PPE | PEI | PPS | PA6 | PP | PBT | PA66 |
| Pretreatment | plasma treatment | UV ozone treatment | corona discharge treatment | corona discharge treatment | plasma treatment | plasma treatment | UV ozone treatment | UV ozone treatment |
| Functional group | KBM-403 end epoxy group | KBM-403 end epoxy group | MOI end methacryloyl group | MOI end methacryloyl group | MOI end methacryloyl group + BD 1 end mercapto group | KBM-503 end methacryloyl group | KBM-503 end methacryloyl group + BD 1 end mercapto group | KBM-403 end epoxy group |
| Bonding condition | 140°C 5 min | 150°C 5 min | 130°C 5 min | 130°C 5 min | 130°C 5 min | 160°C 10 min | 160°C 5 min | 140°C 5 min |
| Tensile shear strength (MPa) | 10.2 | 11.1 | 10.8 | 12.2 | 11 | 8.8 | 11.8 | 10.7 |

**Table 3**

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Metal species | aluminum | copper | stainless steel | iron | magnesium | titanium | aluminum | copper |
| Pretreatment | chemical treatment | acetone degreasing + plasma treatment | acetone degreasing + plasma treatment | acetone degreasing + plasma treatment | acetone degreasing + plasma treatment | acetone degreasing + plasma treatment | acetone degreasing + plasma treatment | acetone degreasing + plasma treatment |
| Functional group | | KBM-903 end amino group | KBM-503 end methacryloyl group + BD 1 end mercapto group | - | - | - | KBM-903 end amino group | KBM-903 end amino group + BD1 end mercapto group |
| Resin species | PC | m-PPE | PEI | PPS | PA6 | PP | PBT | PA66 |
| Pretreatment | plasma treatment | UV ozone treatment | corona discharge treatment | corona discharge treatment | plasma treatment | plasma treatment | UV ozone treatment | UV ozone treatment |
| Functional group | KBM-403 end epoxy group | - | - | MOI end methacryloyl group | MOI end methacryloyl group + BD 1 end mercapto group | KBM-503 end methacryloyl group | - | - |
| Bonding condition | 140°C 5 min | 150°C 5 min | 130°C 5 min | 130°C 5 min | 130°C 5 min | 160°C 10 min | 160°C 5 min | 140°C 5 min |
| Tensile shear strength (MPa) | not bonded | 0.1 | 0.1 | not bonded | not bonded | not bonded | 0.2 | not bonded |

### [Material for Copper-clad Board]

The copper foils and the resin materials shown in Table 4 below were prepared.

**Table 4**

| Copper foil | general electrolytic copper foil CF-TG8-UN-18 thickness: 18 µm | Fukuda Metal Foil & Powder Co., Ltd. |
|---|---|---|
| | electrolytic copper foil for high-speed communication CF-T49A-DS-HD2-18 thickness: 18 µm | |
| | ultra very low profile electrolytic copper foil CF-T9LK-SV-12 thickness: 12 µm | |
| PTFE film | xMSF-40 thickness: 0.25 mm | Chukoh Chemical Industries, Ltd. |
| LCP | R-F7055 thickness: 0.10 mm | Panasonic Corporation |
| m-PPE prepreg | Megtron7 thickness: 0.13 mm | Panasonic Corporation |

Subsequently, all the materials shown in Table 4 each were subjected to a plasma treatment (Openair Plasma Generator FG5001, produced by Plasmatreat Corporation, radiation distance: 15 mm, feed rate: 5 m/min), a corona discharge treatment (KCA-4A, produced by Kasuga Denki, Inc., output: 105 W, electrode distance: 1.0 mm, feed rate: 1.0 mm/min), and an UV ozone treatment (Desktop Surface Treater PL16-110 (lamp: SUV110GS-36), produced by Sen Engineering Co., Ltd., radiation distance: 50 mm, radiation time: 1 minute), and all the materials having been subjected to the three kinds of pretreatments each were subjected to the following functional group-imparting treatments, so as to provide the materials shown in Table 5.
KBM-903 treatment (same method as in Example 1)
KBM-403 treatment (same method as in Example 1)
KBM-503 treatment (same method as in Example 3)
KBM-503 treatment + BD1 treatment (same method as in Example 7)
KBM-903 treatment + BD1 treatment (same method as in Example 8)
MOI treatment + BD1 treatment (same method as in Example 4)

**Table 5**

| Pretreatment | Functional group treatment | Name |
|---|---|---|
| plasma treatment | KBM-903 treatment | P-903-material name |
| | KBM-403 treatment | P-403-material name |
| | KBM-503 treatment | P-503-material name |
| | KBM-503 treatment + BD1 treatment | P-503-BD 1-material name |
| | KBM-903 treatment + BDltreatment | P-903-BD 1-material name |
| | MOI treatment + BD1 treatment | P-MOI-BD 1-material name |
| corona discharge treatment | KBM-903 treatment | C-903-material name |
| | KBM-403 treatment | C-403-material name |
| | KBM-503 treatment | C-503-material name |
| | KBM-503 treatment + BD1 treatment | C-503-BD 1-material name |
| | KBM-903 treatment + BDltreatment | C-903-BD1-material name |
| | MOI treatment + BD1 treatment | C-MOI-BD 1-material name |
| UV ozone treatment | KBM-903 treatment | U-903-material name |
| | KBM-403 treatment | U-403-material name |
| | KBM-503 treatment | U-503-material name |
| | KBM-503 treatment + BD1 treatment | U-503-BD1-material name |
| | KBM-903 treatment + BDltreatment | U-903-BD1-material name |
| | MOI treatment + BD1 treatment | U-MOI-BD 1-material name |

### <Example 9>

The functional group-imparted surface of the ultra very low profile electrolytic copper foil (10 cm square) P-903-CF-T9LK-SV-12 and the treated surface of the modified PPE prepreg (10 cm square) C-403-Megtron7 were joined and press-molded at 150°C and a pressure of 5 MPa for 10 minutes.

Subsequently, the copper foil peel strength (N/mm) was measured according to JIS C6481. The result is shown in Table 6.

### <Comparative Example 9>

The functional group-imparted surface of the ultra very low profile electrolytic copper foil (10 cm square) not subjected to the functional group-imparting treatment CF-T9LK-SV-12 and the treated surface of the modified PPE prepreg (10 cm square) not subjected to the functional group-imparting treatment Megtron7 were joined and press-molded at 150°C and a pressure of 5 MPa for 10 minutes. Subsequently, the copper foil peel strength (N/mm) was measured according to JIS C6481. The result is shown in Table 6.

### <Examples 10 to 16 and Comparative Examples 10 to 16>

The materials were molded in the same manner as in Example 9 and Comparative Example 9 with the combinations and the molding conditions shown in Table 6. The copper foil and the resin was not bonded under the conditions of Comparative Examples 10, 11, and 13. Bonded articles were obtained in the other conditions. For the bonded articles, the copper foil peel strength (N/mm) was measured according to JIS C6481. The results are shown in Table 6.

**Table 6**

| | Example 9 | Example 10 | Example 11 | Example 12 | Example 13 | Example 14 | Example 15 | Example 16 |
|---|---|---|---|---|---|---|---|---|
| Copper foil | P-903-CF-T9LK-SV-12 | U-903- CF-TG8-UN-18 | C-903- CF-T49A-DS-HD2-18 | P-503-BD1-CF-T9LK-SV-12 | U-MOI-BD1-CF-TG8-UN-18 | C-903-BD1-CF-T49A-DS-HD2-18 | P-503-BD1-CF-T9LK-SV-12 | P-903- CF-TG8-UN-18 |
| Resin | C-403-Megtron7 | P-403- xMSF-400 | U-403- R-F7055 | U-903-BD1-Megtron7 | P-903- BD1-xMSF-400 | P-MOI-BD1- R-F7055 | U-403-Megtron7 | C-503-BD1-Megtron |
| Molding condition | 150°C 10 min, 5MPa | 200°C 20 min, 5MPa | 150°C 15 min, 5MPa | 160°C 20 min, 5MPa | 200°C 20 min, 5MPa | 150°C 15 min, 5MPa | 150°C 30 min, 5MPa | 150°C 30 min, 5MPa |
| Copper foil peel strength (N/mm) | 1.5 | 1.3 | 1.4 | 1.2 | 1.1 | 1.1 | 1.2 | 1.3 |

| | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|
| Copper foil | CF-T9LK-SV-12 | CF-TG8-UN-18 | CF-T49A-DS-HD2-18 | P-503-BD1-CF-T9LK-SV-12 | CF-TG8-UN-18 | CF-T49A-DS-HD2-18 | P-503-BD1-CF-T9LK-SV-12 | CF-TG8-UN-18 |
| Resin | Megtron7 | xMSF-400 | R-F7055 | Megtron7 | P-903-BD1-xMSF-400 | P-MOI-BD1- R-F7055 | Megtron7 | C-503-BD1-Megtron7 |
| Molding condition | 150°C 10 min, 5MPa | 200°C 20 min, 5MPa | 150°C 15 min, 5MPa | 160°C 20 min, 5MPa | 200°C 20 min, 5MPa | 150°C 15 min, 5MPa | 150°C 30 min, 5MPa | 150°C 30 min, 5MPa |
| Copper foil peel strength (N/mm) | 0.4 | not bonded | not bonded | 0.6 | not bonded | 0.7 | 0.6 | 0.7 |

### Industrial Applicability

The bonded article according to the present invention can be used, for example, as automobile components, such as a door side panel, an engine hood, a roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and further as structural members of a smartphone, a notebook personal computer, a tablet personal computer, a smartwatch, a large size liquid crystal display television set (LCD-TV), and an outdoor LED illumination, but is not limited to these exemplified applications.

The bonded article according to the present invention that includes a copper foil bonded and adhered to a resin is preferred for the application of the support for high frequency signals of a printed circuit board (PCB).

## Claims

1. A bonded article comprising a functional group-carrying metal surface and a functional group-carrying resin surface, which are bonded directly to each other,
the functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal,
the functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.

2. The bonded article according to claim 1, wherein a combination of the functional group of the functional group-carrying metal surface and the functional group of the functional group-carrying resin surface is at least one of the following items (1) to (8):
(1) a combination of an amino group and an epoxy group,
(2) a combination of a mercapto group and an epoxy group,
(3) a combination of an isocyanato group and an amino group,
(4) a combination of a mercapto group and a (meth)acryloyl group,
(5) a combination of a mercapto group and an amino group,
(6) a combination of a mercapto group and an alkenyl group,
(7) a combination of an amino group and a (meth)acryloyl group, and
(8) a combination of (meth)acryloyl groups.

3. The bonded article according to claim 1, wherein the functional group-carrying metal surface has a functional group that is derived from one or more kind of a compound selected from the group consisting of an isocyanate compound, a thiol compound, an epoxy compound, an amino compound, and a (meth)acryloyl compound, and is imparted through reaction of one or more kind of the functional group selected from the group consisting of an amino group, an epoxy group, a mercapto group, a styryl group, a (meth)acryloyl group, an isocyanato group, and an alkenyl group, existing on the surface of the metal, with one or more kind of the compound selected from the group consisting of an isocyanate compound, a thiol compound, an epoxy compound, an amino compound, and a (meth)acryloyl compound.

4. The bonded article according to claim 1, wherein the functional group-carrying resin surface has a functional group that is derived from one or more kind of a compound selected from the group consisting of an isocyanate compound, a thiol compound, an epoxy compound, an amino compound, and a (meth)acryloyl compound, and is imparted through reaction of one or more kind of the functional group selected from the group consisting of an amino group, an epoxy group, a mercapto group, a styryl group, a (meth)acryloyl group, an isocyanato group, and an alkenyl group, existing on the surface of the resin, with one or more kind of the compound selected from the group consisting of an isocyanate compound, a thiol compound, an epoxy compound, an amino compound, and a (meth)acryloyl compound.

5. The bonded article according to any one of claims 1 to 4, wherein the metal is one or more kind selected from the group consisting of iron, copper, aluminum, magnesium, and titanium.

6. The bonded article according to any one of claims 1 to 5, wherein the resin has one or more kind of a form selected from the group consisting of a block object, a film, a sheet, an FRP, and a prepreg.

7. A method for bonding a metal and a resin, comprising bonding under pressure
a functional group-carrying metal surface having one or more kind of a functional group selected from the group consisting of an amino group, an epoxy group, a mercapto group, a styryl group, a (meth)acryloyl group, an isocyanato group, and an alkenyl group, on a surface of a metal, and
a functional group-carrying resin surface having one or more kind of a functional group selected from the group consisting of an amino group, an epoxy group, a mercapto group, a styryl group, a (meth)acryloyl group, an isocyanato group, and an alkenyl group, on a surface of a resin.

8. The method for bonding a metal and a resin according to claim 7, wherein a combination of the functional group of the functional group-carrying metal surface and the functional group of the functional group-carrying resin surface is at least one of the following items (1) to (8):
(1) a combination of an amino group and an epoxy group,
(2) a combination of a mercapto group and an epoxy group,
(3) a combination of an isocyanato group and an amino group,
(4) a combination of a mercapto group and a (meth)acryloyl group,
(5) a combination of a mercapto group and an amino group,
(6) a combination of a mercapto group and an alkenyl group,
(7) a combination of an amino group and a (meth)acryloyl group, and
(8) a combination of (meth)acryloyl groups.

9. The method for bonding a metal and a resin according to claim 7 or 8, wherein the method comprises reacting a metal having on a surface thereof one or more kind selected from the group consisting of a hydroxy group, a formyl group, a carboxy group, and a radical, with an alkoxysilane and/or a compound having one kind of a functional group selected from the group consisting of an amino group, an epoxy group, a mercapto group, an isocyanato group, and a radical reactive group, so as to form the functional group-carrying metal surface.

10. The method for bonding a metal and a resin according to claim 7 or 8, wherein the method comprises reacting a resin having on a surface thereof one or more kind selected from the group consisting of a hydroxy group, a formyl group, a carboxy group, and a radical, with an alkoxysilane and/or a compound having one kind of a functional group selected from the group consisting of an amino group, an epoxy group, a mercapto group, an isocyanato group, and a radical reactive group, so as to form the functional group-carrying resin surface.

11. The method for bonding a metal and a resin according to claim 9 or 10, wherein the alkoxysilane is a silane coupling agent having one or more kind of a functional group selected from the group consisting of an amino group, an epoxy group, a mercapto group, a styryl group, a (meth)acryloyl group, and an isocyanato group.

12. The method for bonding a metal and a resin according to claim 9 or 10, wherein the compound having an amino group is at least one of an amino compound having a (meth)acryloyl group and an amino compound having a bifunctional or higher functional amino group.

13. The method for bonding a metal and a resin according to claim 9 or 10, wherein the compound having an epoxy group is one or more kind selected from the group consisting of an epoxy compound having a (meth)acryloyl group, an epoxy compound having an alkenyl group, and a bifunctional or higher functional epoxy compound.

14. The method for bonding a metal and a resin according to claim 9 or 10, wherein the compound having a mercapto group is a bifunctional or higher functional thiol compound.

15. The method for bonding a metal and a resin according to claim 9 or 10, wherein the compound having an isocyanato group is at least one of an isocyanato compound having a (meth)acryloyl group and a bifunctional or higher functional isocyanato compound.

16. The method for bonding a metal and a resin according to claim 9 or 10, wherein the compound having a radical reactive group is a compound having a (meth)acryloyl group.

17. The method for bonding a metal and a resin according to claim 7 or 8, wherein the method comprises reacting a metal having on a surface thereof one or more kind of a functional group selected from the group consisting of an amino group, an epoxy group, a mercapto group, a styryl group, a (meth)acryloyl group, an isocyanato group, and an alkenyl group, with one or more kind of a compound selected from the group consisting of an isocyanate compound, a thiol compound, an epoxy compound, an amino compound, and a (meth)acryloyl compound, so as to form the functional group-carrying metal surface.

18. The method for bonding a metal and a resin according to claim 7 or 8, wherein the method comprises reacting a resin having on a surface thereof one or more kind of a functional group selected from the group consisting of an amino group, an epoxy group, a mercapto group, a styryl group, a (meth)acryloyl group, an isocyanato group, and an alkenyl group, with one or more kind of a compound selected from the group consisting of an isocyanate compound, a thiol compound, an epoxy compound, an amino compound, and a (meth)acryloyl compound, so as to form the functional group-carrying resin surface.

19. The method for bonding a metal and a resin according to any one of claims 7 to 18, wherein the method comprises cleaning at least one of the functional group-carrying metal surface and the functional group-carrying resin surface, before the bonding under pressure.

20. The method for bonding a metal and a resin according to any one of claims 7 to 19, wherein the bonding under pressure is performed under heat.

21. The method for bonding a metal and a resin according to any one of claims 7 to 20, wherein the metal is one or more kind selected from the group consisting of iron, copper, aluminum, magnesium, and titanium.

22. The method for bonding a metal and a resin according to any one of claims 7 to 21, wherein the resin has one or more kind of a form selected from the group consisting of a block object, a film, a sheet, an FRP, and a prepreg.
